# FASCICULE DE BREVET EUROPEEN

(11) **EP 1 902 946 B1**
(45) Date de publication et mention de la délivrance du brevet: **29.04.2009**
(21) Numéro de dépôt: 07352005.8
(22) Date de dépôt: 21.09.2007
(51) Int. Cl.: B64C 3/18

(54) **Aéronef léger, comportant des ailes perfectionnées**
Leichtes Luftschiff, das mit perfektionierten Flügeln ausgestattet ist
Light aircraft, comprising improved wings

(30) Priorité: 22.09.2006 FR 0608296
(43) Date de publication de la demande: 26.03.2008
(73) Titulaire: Prévot, Philippe, 82000 Montauban (FR)
(72) Inventeur: Prévot, Philippe, 82000 Montauban (FR)
(74) Mandataire: Morelle, Guy Georges Alain

(56) Documents cités:
- CH-A- 139 630
- FR-A- 493 993
- GB-A- 190 927 988
- US-B1- 6 260 795

## Description

La présente invention se rapporte au domaine de l'aéronautique, plus particulièrement à un aéronef léger muni d'une aile droite et d'une aile gauche comprenant chacune :
- une ossature rigide comportant une poutre de bord d'attaque et une poutre de bord de fuite,
- une pluralité de tiges ou lattes rigides d'extrados à profil prédéterminé, joignant la poutre de bord d'attaque et la poutre de bord de fuite en vue de conférer à l'aile son profil d'extrados,
- une pluralité de tiges ou lattes rigides d'intrados à profil prédéterminé, joignant la poutre de bord d'attaque et la poutre de bord de fuite en vue de conférer à l'aile son profil d'intrados,
- une enveloppe souple recouvrant ladite ossature rigide de l'aile, définissant un profil d'aile via lesdites tiges rigides d'extrados et d'intrados, et comprenant une pluralité de logements dans laquelle sont logées ladite pluralité de tiges rigides d'extrados et ladite pluralité de tiges rigides d'intrados d'une aile.

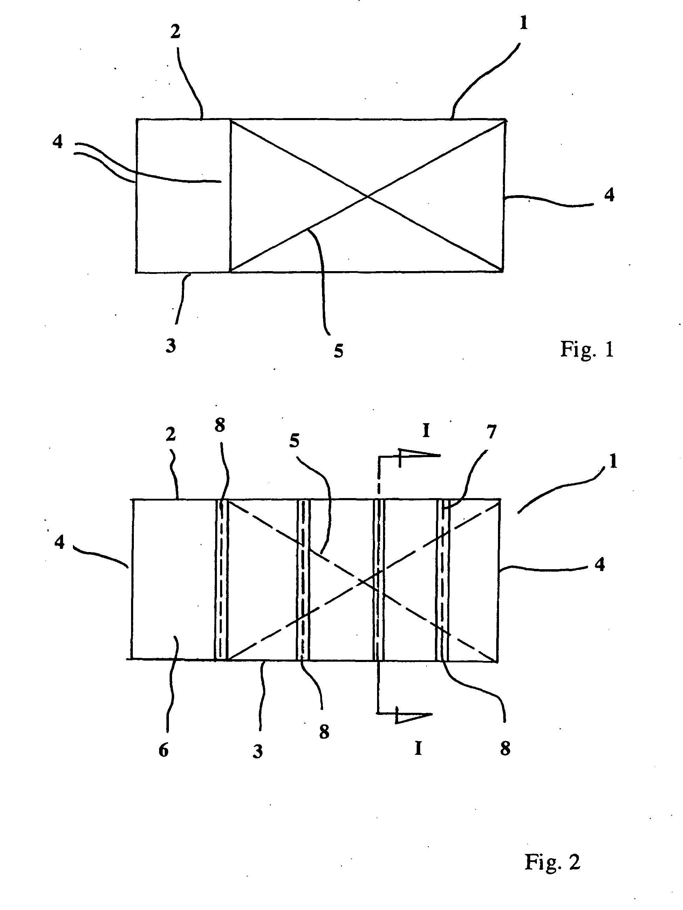

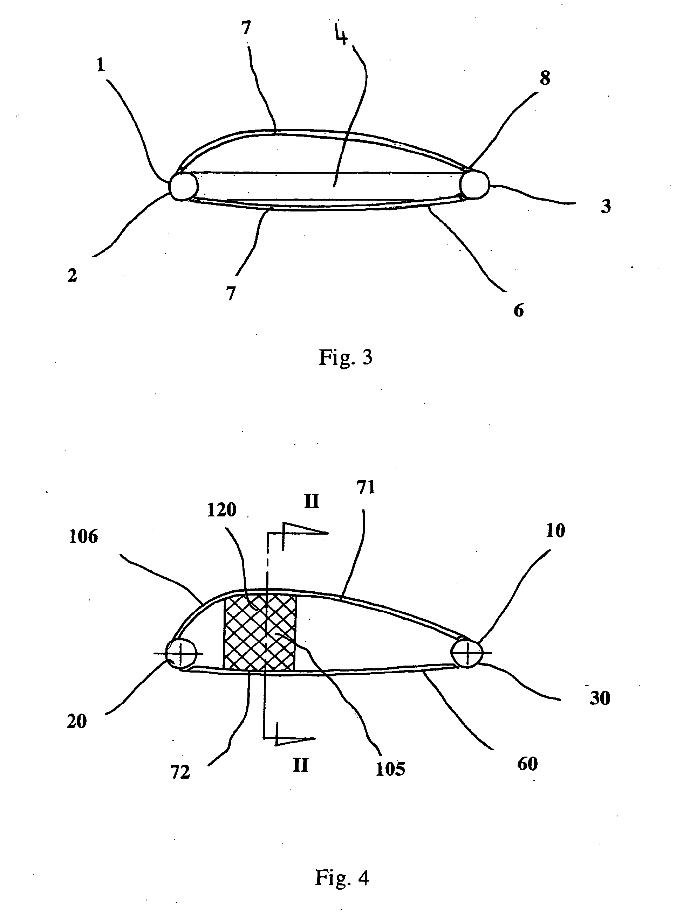

L'Art antérieur enseigne de tels aéronefs, par exemple comme représenté dans le document CH139630, et partiellement sur la figure 1. La figure 1 représente une ossature rigide 1 d'une aile en vue de dessus, comprenant une poutre 2 de bord d'attaque, une poutre 3 de bord de fuite, des barres 4 rigides de liaison entre ces deux poutres, et un ensemble de triangulation 5 constitué de barres croisées permettant de rigidifier l'ossature. L'ossature est recouverte d'une enveloppe souple 6 appelée « chaussette », comme représenté sur la figure 2, définissant le profil d'aile aux moyens de tiges 7 dont le profil est prédéterminé et qui sont placées entre la poutre 2 de bord d'attaque et la poutre 3 de bord de fuite comme représenté sur la figure 3 qui est une vue en coupe de la figure 2. Par enveloppe souple, on entend ici un film souple, une toile, ou analogue, par exemple tissu polyester, tissu Trilam®, définissant plus communément une technique connue dite « tubes et toiles » lorsque l'ossature rigide est en toute ou partie tubulaire.

D'une manière générale, les tiges extrados et intrados définissant le profil de l'aile sont disposées et emprisonnées dans des fourreaux 8 formés sur l'enveloppe souple 6. D'une manière générale également, la structure rigide de l'aéronef, notamment celle des ailes, est composée de tubes métalliques rigides à profil prédéterminé. Du fait de la structure spécifique de ce type d'aéronef léger, il est ici précisé certaines notions terminologiques : les tiges rigides d'intrados et d'extrados, bien que n'étant normalement pas liées par une liaison rigide directement aux poutres de bord d'attaque et de bord de fuite, donc ne faisant pas partie monobloc de l'ossature rigide, peuvent être considérées par extension comme participant à cette ossature rigide et ainsi comme élément constitutif de celle-ci via l'enveloppe souple du fait de leur participation à la définition du profil d'aile.

Du fait des contraintes de légèreté de ce type d'aéronef, le profil d'aile est ainsi défini au moyen de l'ossature rigide combinée avec l'enveloppe souple et les tiges rigides d'extrados et d'intrados. Le terme « joignant » utilisé plus haut à l'égard des tiges et des poutres de bord d'attaque et de fuite, est précisé ici : il est à noter que les tiges d'extrados et d'intrados peuvent ne pas être liées directement aux poutres de bord d'attaque et de bord de fuite comme expliqué plus haut; en effet, leurs extrémités peuvent être seulement proches des poutres de bord d'attaque et de bord de fuite respectivement et séparées de celles-ci par une distance faible, la liaison entre les tiges d'extrados et d'intrados et les poutres de bord d'attaque et de bord de fuite étant constituée par l'enveloppe souple. La rigidité de l'ensemble est obtenue d'une part par le fait que la distance entre l'extrémité des tiges et les poutres de bord d'attaque et de bord de fuite est faible réduisant au minimum le mouvement relatif des unes par rapport aux autres qui pourrait être consécutif à la souplesse de l'enveloppe, et d'autre part par la tension à laquelle est soumise l'enveloppe souple sur l'ossature.

Une telle technologie pour des aéronefs légers, notamment de type ULM, à structure rigide et enveloppe souple, fonctionne correctement mais présente un inconvénient majeur : lorsque l'aéronef est en vol, la résultante des efforts aérodynamiques qui s'exercent sur les ailes a tendance à déformer le profil d'aile, notamment à l'« écraser », de manière d'autant plus importante que la vitesse de l'aéronef est élevée, en déformant les tiges extrados et intrados, ce qui a pour conséquence de modifier ce profil d'aile en vol et selon les conditions de vol, et donc de changer les caractéristiques de l'aéronef en vol, ce qui peut être préjudiciable au pilotage, et surtout aux performances.

La présente invention se propose de pallier ces inconvénients et d'apporter d'autres avantages. Plus précisément, elle consiste en un aéronef léger muni d'une aile droite et d'une aile gauche comprenant chacune :
- une ossature rigide comportant une poutre de bord d'attaque et une poutre de bord de fuite,
- une pluralité de tiges rigides d'extrados à profil prédéterminé, joignant la poutre de bord d'attaque et la poutre de bord de fuite en vue de conférer à l'aile son profil d'extrados,
- une pluralité de tiges rigides d'intrados à profil prédéterminé, joignant la poutre de bord d'attaque et la poutre de bord de fuite en vue de conférer à l'aile son profil d'intrados,
- une enveloppe souple recouvrant ladite ossature rigide de l'aile, définissant un profil d'aile via lesdites tiges rigides d'extrados et d'intrados, et comprenant une pluralité de logements dans laquelle sont logées ladite pluralité de tiges rigides d'extrados et ladite pluralité de tiges rigides d'intrados d'une aile,
caractérisé en ce que ledit aéronef comprend en outre une pluralité d'entretoises rigides disposées respectivement entre une tige d'extrados et une tige d'intrados, ladite tige d'intrados et ladite tige d'extrados entre lesquelles une entretoise est disposée étant sensiblement alignées dans un plan vertical, en vue de maintenir un écartement fixe prédéterminé entre ladite tige d'intrados et ladite tige d'extrados.

L'intégration d'entretoises entre les tiges d'extrados et d'intrados permet de lier ces deux tiges dans un plan transversal de l'aile, et donc d'empêcher tout mouvement relatif de la tige d'extrados par rapport à la tige d'intrados, en vue de préserver ainsi les performances prédéterminées du profil d'aile. La solution d'une combinaison des tiges d'extrados et d'intrados avec une entretoise permet de garantir la légèreté de la structure sans compromettre le principe du profil d'aile obtenu par combinaison d'une enveloppe souple et d'une structure rigide, avec les avantages qu'il procure, à savoir légèreté, simplicité de conception, fiabilité, facilité de montage, de démontage, et de réparation.

Selon une caractéristique avantageuse, ladite enveloppe souple comprend une pluralité de logements dans laquelle sont logées ladite pluralité de tiges rigides d'extrados et ladite pluralité de tiges rigides d'intrados d'une aile, et ladite pluralité d'entretoises est associée aux dites tiges rigides d'extrados et d'intrados via ladite enveloppe souple.

Cette caractéristique permet d'appliquer la présente invention à un aéronef de l'art antérieur avec mise en appui des entretoises sur les tiges de profil d'aile, l'enveloppe souple étant présente entre l'entretoise et la tige d'extrados ou d'intrados.

Selon une caractéristique avantageuse, une entretoise de ladite pluralité d'entretoises est associée à ladite enveloppe souple ou aux dites tiges rigides d'extrados et d'intrados par une liaison de type auto-bloquante, dont la caractéristique auto-bloquante est assurée lorsque ledit aéronef est en vol.

Cette caractéristique permet de bien intégrer l'invention dans le concept d'un aéronef léger à structure rigide et enveloppe souple, en utilisant au mieux les efforts qui entrent en jeu sur l'aile en vol, combinés à la forme et à la rigidité des tiges d'extrados et d'intrados, pour maintenir les entretoises en place.

Selon une caractéristique avantageuse, ladite pluralité d'entretoises est associée de manière amovible à ladite enveloppe souple ou aux dites tiges rigides d'extrados et d'intrados.

Cette caractéristique contribue à un démontage rapide et aisé de l'aéronef, et permet de réduire le temps de montage par l'utilisation d'une liaison simple à mettre en oeuvre. En outre, le caractère amovible des entretoises permet d'envisager un remplacement rapide, en partie ou en totalité pour un aéronef donné, d'un jeu d'entretoises par des entretoises de dimensions différentes, en vue de modifier le profil d'aile prédéterminé par les tiges, en jouant avantageusement sur la flexibilité des tiges d'intrados et d'extrados.

Selon une caractéristique avantageuse, une entretoise de ladite pluralité d'entretoises est associée de manière amovible à ladite enveloppe souple ou aux dites tiges rigides d'extrados et d'intrados par une liaison démontable rapide du type « Velcro » ou analogue.

Une telle liaison est un exemple de mide en oeuvre d'une liaison amovible. Il est à noter que le caractère amovible de l'association entre l'entretoise et les les tiges d'extrados et d'intrados peut n'être que partiel, c'est à dire que l'entretoise peut être associée à une première des tiges d'intrados ou d'extrados de manière amovible, cette entretoise pouvant être dans ce cas liée à la deuxième des tiges d'intrados ou d'extrados de manière non amovible, par exemple par une liaison souple via l'enveloppe souple qui devient une liaison complète lorsque l'entretoise est reliée à la première tige.

Selon une caractéristique avantageuse, une entretoise de ladite pluralité d'entretoises rigides occupe un espace partiel entre la poutre de bord d'attaque et la poutre de bord de fuite.

Cette caractéristique permet d'optimiser le poids ajouté à l'aéronef en réduisant le volume de l'entretoise à son minimum fonctionnel, à savoir un appui sur les tiges via une longueur limitée de celles-ci nécessaire et suffisante pour éviter la déformation du profil d'aile.

Selon une caractéristique avantageuse, ledit espace partiel est limité à une zone correspondant à la partie la plus épaisse du profil d'aile.

Selon une caractéristique avantageuse, une entretoise de ladite pluralité d'entretoises rigides comporte des interfaces avec lesdites tiges d'extrados et d'intrados, adoptant la forme d'une gorge à l'intérieur de laquelle est disposée ladite tige d'extrados ou ladite tige d'intrados.

Selon une caractéristique avantageuse, ladite gorge adopte une section en forme de V, de U, ou d'arc de cercle.

Selon une caractéristique avantageuse, lesdits logements de ladite enveloppe souple dans lesquels sont logées les tiges rigides d'extrados et les tiges rigides d'intrados, respectivement, sont constitués chacun d'un fourreau souple à l'intérieur duquel est glissée une tige rigide d'intrados ou d'extrados.

D'autres caractéristiques apparaîtront à la lecture qui suit de la description d'un exemple de mode de réalisation d'un aéronef léger selon l'invention, accompagnée des dessins annexés, exemple donné à titre illustratif non limitatif.

La figure 1 représente de manière schématique une vue de dessus d'une ossature rigide d'une aile d'aéronef selon l'art antérieur.

La figure 2 représente l'ossature d'aile selon la figure 1, sur laquelle l'enveloppe souple a été placée, selon l'art antérieur.

La figure 3 représente une vue en coupe transversale selon la ligne 1-1 de la figure 2.

La figure 4 représente de manière partielle et schématique un exemple de mode de réalisation d'un aéronef léger selon l'invention, et plus particulièrement une section transversale d'une aile.

La figure 5 représente une coupe longitudinale partielle agrandie selon la ligne II-II de la figure 4.

La figure 6 représente un détail agrandi de la figure 5.

Un exemple de mode de réalisation d'un aéronef léger selon l'invention est partiellement représenté sur les figures 4 à 6. La partie caractérisante de l'invention est localisée dans les ailes de l'aéronef, et peut être appliquée à tout aéronef léger connu muni d'une aile droite et d'une aile gauche comprenant chacune :
- une ossature rigide 10 comportant une poutre de bord d'attaque 20 et une poutre de bord de fuite 30,
- une pluralité de tiges 71 rigides d'extrados à profil prédéterminé, joignant la poutre de bord d'attaque 20 et la poutre de bord de fuite 30 en vue de conférer à l'aile son profil d'extrados,
- une pluralité de tiges 72 rigides d'intrados à profil prédéterminé, joignant la poutre de bord d'attaque 20 et la poutre de bord de fuite 30 en vue de conférer à l'aile son profil d'intrados,
- une enveloppe souple 60 recouvrant l'ossature rigide 10 de l'aile, définissant un profil d'aile via les tiges rigides d'extrados 71 et d'intrados 72, et comprenant une pluralité de logements 80 dans laquelle sont logées la pluralité de tiges rigides d'extrados 71 et la pluralité de tiges rigides d'intrados 72 d'une aile, selon une distribution d'un logement par tige.

De tels tels aéronefs sont connus de l'homme du métier et ne seront pas plus particulièrement décrits ici. On citera par exemple un aéronef léger motorisé disponible sur le marché sous la dénomination de « Skyranger », fabriqué et distribué par la demanderesse, de type ossature tubulaire rigide et enveloppe souple, sur lequel la partie caractérisante de la présente invention peut être appliquée. Un aéronef non motorisé de type planeur peut également convenir. La description qui suit se rapporte donc à la seule structure de l'aile de l'aéronef selon l'invention, la partie complémentaire de ce dernier (fuselage) pour former l'aéronef complet étant du domaine de l'état de la technique connu de l'homme du métier à la date de dépôt de la présente demande.

Les figures 1, 2, et 3 décrites plus haut montrent un exemple de structure d'aile d'aéronef léger selon l'état de la technique connu à la date de dépôt de la présente demande, sur lequel peut être appliqué la partie caractérisante de la présente invention. Plus précisément, en rapport avec les figures 1, 2, et 3, l'ossature rigide 1 connue selon la figure 1 est une ossature de type tubulaire avec ensemble de triangulation 5 pour rigidifier la structure porteuse de l'aile. L'ossature rigide 1 est recouverte de manière connue d'une enveloppe souple 6 qui définit en combinaison avec celle-ci le profil d'aile, grâce à des tiges 7 de profil ou forme prédéterminé sur leur longueur, dans l'exemple des tubes 7 insérés dans des fourreaux 8 longitudinaux formés sur l'extrados et l'intrados de l'enveloppe souple 6, comme représenté sur la figure 2. Les tubes 7 sont donc placés sensiblement dans un plan parallèle à l'axe de l'aéronef. Un tube 7 est enfermé dans son fourreau respectif par exemple au moyen d'une ouverture que l'on peut refermer après avoir inséré le tube. Comme représenté sur la figure 3, et expliqué plus haut, les tubes 7 assurent sensiblement une « liaison » entre la poutre de bord d'attaque 2 et la poutre de bord de fuite 3 afin d'assurer un profil rigide sensiblement continu entre le bord d'attaque et le bord de fuite. Ainsi, une fois l'enveloppe 6 enfilée sur l'ossature de l'aile et les tubes 7 insérés dans les fourreaux d'extrados et d'intrados, l'aile de l'aéronef est formée avec ses dimensions de vol.

Selon l'invention, tel que représenté sur la figure 4, l'aéronef comprend en outre une pluralité d'entretoises rigides 120 disposées respectivement entre une tige d'extrados 71 et une tige d'intrados 72, la tige d'intrados 72 et la tige d'extrados 71 entre lesquelles une entretoise 120 est disposée étant sensiblement alignées dans un plan vertical 104, correspondant au plan de la feuille dans l'exemple de la figure 4, en vue de maintenir un écartement fixe prédéterminé entre la tige d'intrados 72 et la tige d'extrados 71. Il est à noter que l'entretoise 120 peut s'écarter de l'alignement dans le plan vertical 104 pour être en prise sur une tige intrados et une tige extrados qui ne seraient pas exactement alignées dans ledit plan vertical. Cependant, c'est dans le plan vertical que l'entretoise 120 exercera une résistance optimisée aux efforts aérodynamiques.

Sur les figures 4, 5, et 6, les éléments remplissant la même fonction que ceux des figures 1 à 3 de l'art antérieur ont été affectés des mêmes références numériques multipliées par le nombre 10. Les tiges rigides 7 de profil d'aile sur les figures 1 à 3 ont en outre été décomposées en tiges d'extrados 71 et d'intrados 72 sur les figures 4 à 6.

De manière avantageuse, l'enveloppe souple 60 comprend une pluralité de logements 80 sensiblement contenus dans des plans verticaux parallèles, dans laquelle sont logées ladite pluralité de tiges rigides d'extrados 71 et ladite pluralité de tiges rigides d'intrados 72 d'une aile, et la pluralité d'entretoises 120 est associée aux tiges rigides d'extrados 71 et d'intrados 72 via l'enveloppe souple 60. Les logements 80 sont de manière connue, respectivement constitués par des fourreaux souples solidaires de l'enveloppe souple et formés par exemple par association d'une feuille souple 101 locale à une feuille 102 constitutive de l'enveloppe 60, pour définir un logement en forme de poche, d'une forme spécifique, allongée, apte à guider et maintenir dans la position désirée une tige 71 ou 72 rigide de profil d'aile que l'on glisse dans le fourreau souple.

De manière avantageuse, une entretoise 120 de la pluralité d'entretoises rigides occupe un espace partiel entre la poutre 20 de bord d'attaque et la poutre 30 de bord de fuite. Comme représenté sur la figure 4, l'entretoise 120 est avantageusement limitée en longueur à une zone 105 correspondant à la partie la plus épaisse du profil 106 d'aile. Par exemple, la longueur de l'entretoise, plus précisément de la portée sur une tige d'intrados ou une tige d'extrados peut être avantageusement comprise entre un appui ponctuel et 30 % de la longueur du profil d'aile, de préférence entre 5% et 15% de cette longueur afin d'alléger le dispositif tout en assurant une résistance de l'épaisseur du profil dans la zone la plus sollicitée par les efforts aérodynamiques.

De manière avantageuse, une entretoise 120 de la pluralité d'entretoises est associée à l'enveloppe souple 60 ou aux tiges rigides d'extrados 71 et d'intrados 72 par une liaison de type auto-bloquante, dont la caractéristique auto-bloquante est assurée lorsque l'aéronef est en vol. Un tel effet est de préférence obtenue en assurant l'appui de l'entretoise sur une tige d'intrados ou d'extrados par l'intermédiaire de l'enveloppe souple 60 qui entoure chaque tige, au moins dans une zone dans laquelle le profil des tiges d'extrados et d'intrados est convergent vers le bord de fuite, de préférence dans une zone courbe de la longueur de la tige comportant une partie convergente vers l'extrados et une partie convergente vers l'intrados, de préférence la plus courbe, soit vers le bord d'attaque de l'aile, comme représenté sur la figure 4.

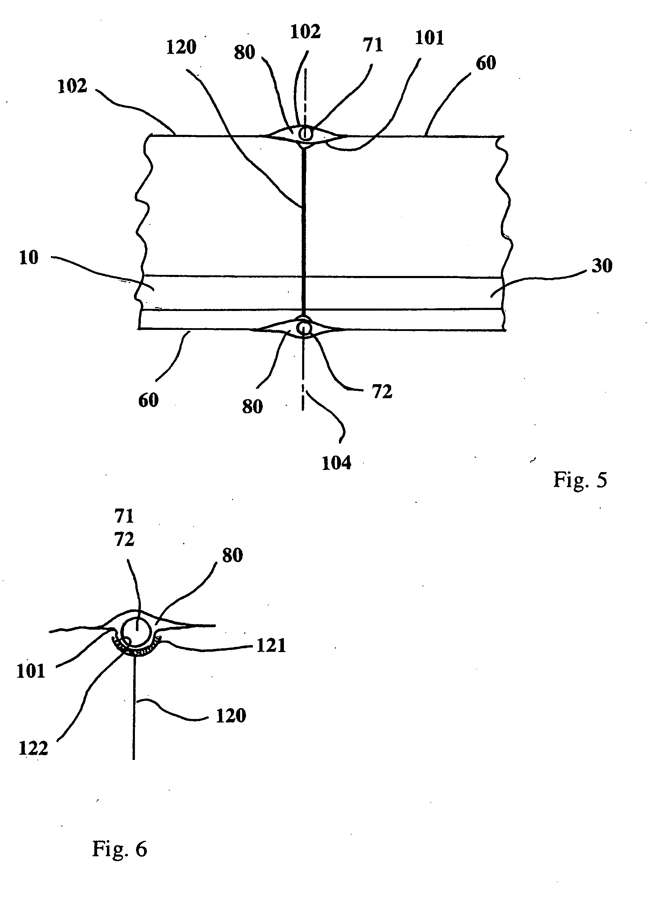

De manière avantageuse, la pluralité d'entretoises 120 est associée de manière amovible à l'enveloppe souple 60 ou aux dites tiges rigides d'extrados et d'intrados. Une entretoise 120 de la pluralité d'entretoises est associée de manière amovible à l'enveloppe souple 60 ou aux tiges rigides d'extrados 71 et d'intrados 72 par exemple au moyen d'une liaison 121 démontable rapide du type « Velcro » ou analogue, comme représenté sur la figure 6. A cet effet, l'enveloppe 60 est dotée d'une première partie accrochante de la liaison velcro 121, disposée le long du fourreau 80 sur la surface intérieure 101 de l'enveloppe 60, en correspondance avec la tige d'intrados ou d'extrados disposée dans le fourreau, de façon qu'un appui sur la première partie accrochante de la liaison « Velcro » soit transmis à la tige à l'intérieur du fourreau. La deuxième partie de la liaison «Velcro» est associée à l'entretoise 120, plus particulièrement à la partie de l'entretoise destinée à venir prendre appui sur la tige 71 ou 72 via l'enveloppe 60. Les deux extrémités d'une entretoise 120 destinées à venir prendre appui respectivement sur les tiges intrados 72 et extrados 71 via l'enveloppe 60 sont ainsi respectivement munie d'une partie de la liaison «Velcro », l'autre partie complémentaire de cette liaison étant associée à l'enveloppe souple, respectivement en intrados et en extrados en regard des tiges. La liaison par bande adhésive à crochets de type « Velcro » assure une liaison de résistance suffisante, ce d'autant plus que l'entretoise 120 sera disposée dans une zone du profil assurant un auto-blocage de la liaison comme expliqué plus haut.

De manière avantageuse, une entretoise 120 de la pluralité d'entretoises rigides comporte des interfaces avec les tiges d'extrados 71 et d'intrados 72, adoptant la forme d'une gorge 122, adoptant par exemple une section en forme de V, de U, ou d'arc de cercle à l'intérieur de laquelle est disposée la tige d'extrados 71 ou la tige d'intrados 72, comme représenté sur la figure 6 qui illustre le détail agrandi de la liaison entre l'entretoise 120 et l'intrados ou l'extrados. La section transversale de la gorge 122 adoptera de préférence une forme complémentaire de la section de la tige d'intrados 72 ou d'extrados 71, notamment en cas de liaison par bande adhésive de type velcro, afin d'assurer une pression par contact sur la plus grande surface possible de bande adhésive. Dans le cas de tiges d'intrados ou d'extrados à section tubulaire circulaire, la gorge 122 pourra avantageusement adopter une section en forme d'arc de cercle, comme représenté sur la figure 6.

L'entretoise 120 peut adopter la forme d'un volume en matériau léger, par exemple en matière plastique, composite, ou la forme d'une structure à barres, de préférence tubulaire, définissant deux points d'appui ou plus à l'extrémité des barres sur les tiges d'intrados et d'extrados respectivement. Une simple barre peut constituer une entretoise, les appuis en extrados et intrados étant assurés par les extrémités de cette barre munie pour la circonstance de préférence d'une surface d'appui permettant de diminuer la pression sur les tiges en extrados et intrados ou sur l'enveloppe souple, ceci en tenant compte de la pression nécessaire pour assurer la liaison entre l'entretoise 120 et les tiges d'extrados et d'intrados ou les fourreaux les contenant, qui devra de préférence être une liaison complète. Afin d'assurer une meilleure stabilité de l'entretoise 120, et d'éviter le cas échéant des problèmes de flambage de cette entretoise, trois points d'appui seront préférés à deux, selon les besoins. Une entretoise à structure tubulaire en forme de H conférant quatre points d'appui, deux en intrados, et deux en extrados, peut également être envisagée. L'entretoise 120 peut de manière alternative être constituée d'une plaque en matériau léger, évidée ou pas, les gorges 122 étant formées dans l'épaisseur de la plaque sur un bord supérieur et un bord inférieur de la plaque.

D'autres moyens de fixation de l'entretoise 120 directement en prise sur les tiges d'intrados 72 ou d'extrados 71 pourraient être utilisés, via des ouvertures réalisées dans l'enveloppe (non représenté) ; dans ce cas, la liaison entre l'entretoise 120 et une tige d'intrados ou d'extrados peut être réalisée par exemple au moyen d'une mâchoire de serrage ou d'un clip élastique ; une liaison de type auto-bloquante telle que décrite plus haut peut être dans ce cas en outre appliquée.

## Revendications

1. Aéronef léger muni d'une aile droite et d'une aile gauche comprenant chacune :
- une ossature rigide (10) comportant une poutre de bord d'attaque (20) et une poutre de bord de fuite (30),
- une pluralité de tiges rigides d'extrados (71) à profil prédéterminé, joignant la poutre de bord d'attaque et la poutre de bord de fuite en vue de conférer à l'aile son profil d'extrados,
- une pluralité de tiges rigides d'intrados (72) à profil prédéterminé, joignant la poutre de bord d'attaque et la poutre de bord de fuite en vue de conférer à l'aile son profil d'intrados,
- une enveloppe souple (60) recouvrant ladite ossature rigide de l'aile, définissant un profil d'aile via lesdites tiges rigides d'extrados et d'intrados, et comprenant une pluralité de logements (80) dans laquelle sont logées ladite pluralité de tiges rigides d'extrados (71) et ladite pluralité de tiges rigides d'intrados (72) d'une aile,
***caractérisé en ce que*** ledit aéronef comprend en outre une pluralité d'entretoises rigides (120) disposées respectivement entre une tige d'extrados (71) et une tige d'intrados (72), ladite tige d'intrados et ladite tige d'extrados entre lesquelles une entretoise est disposée étant sensiblement alignées dans un plan vertical (104), en vue de maintenir un écartement fixe prédéterminé entre ladite tige d'intrados et ladite tige d'extrados.

2. Aéronef léger suivant la revendication 1, ***caractérisé en ce que*** ladite enveloppe souple (60) comprend une pluralité de logements (80) dans laquelle sont logées ladite pluralité de tiges rigides d'extrados (71) et ladite pluralité de tiges rigides d'intrados (72) d'une aile, et **en ce que** ladite pluralité d'entretoises est associée aux dites tiges rigides d'extrados et d'intrados via ladite enveloppe souple.

3. Aéronef léger suivant la revendication 1 ou 2, ***caractérisé en ce qu*'**une entretoise (120) de ladite pluralité d'entretoises est associée à ladite enveloppe souple (60) ou aux dites tiges rigides d'extrados (71) et d'intrados (72) par une liaison de type auto-bloquante, dont la caractéristique auto-bloquante est assurée lorsque ledit aéronef est en vol.

4. Aéronef léger suivant l'une quelconque des revendications 1 à 3, ***caractérisé en ce que*** ladite pluralité d'entretoises (120) est associée de manière amovible à ladite enveloppe souple (60) ou aux dites tiges rigides d'extrados (71) et d'intrados (72).

5. Aéronef léger suivant la revendication 4, ***caractérisé en ce qu'***une entretoise (120) de ladite pluralité d'entretoises est associée de manière amovible à ladite enveloppe souple (60) ou aux dites tiges rigides d'extrados (71) et d'intrados (72) par une liaison (121) démontable rapide du type « Velcro » ou analogue.

6. Aéronef léger suivant l'une quelconque des revendications 1 à 5, ***caractérisé en ce qu'***une entretoise (120) de ladite pluralité d'entretoises rigides occupe un espace partiel entre la poutre de bord d'attaque (20) et la poutre de bord de fuite (30).

7. Aéronef léger suivant la revendication 6, ***caractérisé en ce que*** ledit espace partiel est limité à une zone (105) correspondant à la partie la plus épaisse du profil d'aile (106).

8. Aéronef léger suivant l'une quelconque des revendications 1 à 7, ***caractérisé en ce qu'***une entretoise (120) de ladite pluralité d'entretoises rigides comporte des interfaces avec lesdites tiges d'extrados (71) et d'intrados (72), adoptant la forme d'une gorge (122) à l'intérieur de laquelle est disposée ladite tige d'extrados ou ladite tige d'intrados.

9. Aéronef léger suivant la revendication 8, ***caractérisé en ce que*** ladite gorge (122) adopte une section en forme de V, de U, ou d'arc de cercle.

10. Aéronef léger suivant la revendication 2, ***caractérisé en ce que*** lesdits logements (80) de ladite enveloppe souple (60) dans lesquels sont logées les tiges rigides d'extrados (71) et les tiges rigides d'intrados (72), respectivement, sont constitués chacun d'un fourreau souple à l'intérieur duquel est glissée une tige rigide d'intrados ou d'extrados.

## Claims

1. Light aircraft provided with a right wing and a left wing each of which comprises:
- a rigid framework (10) including a leading-edge spar (20) and a trailing-edge spar (30),
- a plurality of rigid upper-surface rods (71) having a predetermined profile, joining the leading-edge spar and the trailing-edge spar in order to provide the wing with its upper-surface profile,
- a plurality of rigid lower-surface rods (72) having a predetermined profile, joining the leading-edge spar and the trailing-edge spar in order to provide the wing with its lower-surface profile,
- a flexible envelope (60) covering said rigid framework of the wing, defining a wing profile by way of said rigid upper-surface and lower-surface rods and including a plurality of accommodation means (80) in which there are accommodated said plurality of rigid upper-surface rods (71) and said plurality of rigid lower-surface rods (72) of a wing, ***characterised in that*** said aircraft additionally comprises a plurality of rigid struts (120) arranged in each case between an upper-surface rod (71) and a lower-surface rod (72), said lower-surface rod and said upper-surface rod between which a strut is arranged being aligned substantially in a vertical plane (104), in order to maintain a predetermined fixed spacing between said lower-surface rod and said upper-surface rod.

2. Light aircraft according to claim 1, ***characterised in that*** said flexible envelope (60) includes a plurality of accommodation means (80) in which there are accommodated said plurality of rigid upper-surface rods (71) and said plurality of rigid lower-surface rods (72) of a wing, and **in that** said plurality of struts are associated with said rigid upper-surface and lower-surface rods by way of said flexible envelope.

3. Light aircraft according to claim 1 or 2, ***characterised in that*** a strut (120) of said plurality of struts is associated with said flexible envelope (60) or with said rigid upper-surface rods (71) and lower-surface rods (72) by means of a connection of self-locking type, the self-locking characteristic of which is ensured when said aircraft is in flight.

4. Light aircraft according to any one of claims 1 to 3, ***characterised in that*** said plurality of struts (120) are associated in removable manner with said flexible envelope (60) or with said rigid upper-surface rods (71) and lower-surface rods (72).

5. Light aircraft according to claim 4, ***characterised in that*** a strut (120) of said plurality of struts is associated in removable manner with said flexible envelope (60) or with said rigid upper-surface rods (71) and lower-surface rods (72) by means of a rapid releasable connection (121) of the "Velcro" type or similar.

6. Light aircraft according to any one of claims 1 to 5, ***characterised in that*** a strut (120) of said plurality of rigid struts occupies a sub-space between the leading-edge spar (20) and the trailing-edge spar (30).

7. Light aircraft according to claim 6, ***characterised in that*** said sub-space is limited to a zone (105) corresponding to the thickest part of the wing profile (106).

8. Light aircraft according to any one of claims 1 to 7, ***characterised in that*** a strut (120) of said plurality of rigid struts has interfaces with said upper-surface rods (71) and lower-surface rods (72), having the shape of a channel (122) within which said upper-surface rod or said lower-surface rod is arranged.

9. Light aircraft according to claim 8, ***characterised in that*** said channel (122) has a cross-section in the shape of a V, a U or an arc of a circle.

10. Light aircraft according to claim 2, ***characterised in that*** said accommodation means (80) of said flexible envelope (60) in which the rigid upper-surface rods (71) and the rigid lower-surface rods (72) are in each case accommodated are each composed of a flexible sleeve inside which there is slid a rigid lower-surface or upper-surface rod.

## Patentansprüche

1. Leichtes Luftfahrzeug, das mit einem rechten Flügel und einem linken Flügel ausgestattet ist, die jeweils umfassen:
- ein starres Gerippe (10), das einen Vorderkantenholm (20) und einen Hinterkantenholm (30) aufweist;
- mehrere starre Oberseitenstangen (71) mit vorbestimmtem Profil, die mit dem Vorderkantenholm und dem Hinterkantenholm verbunden sind, um dem Flügel sein Oberseitenprofil zu verleihen;
- mehrere starre Unterseitenstangen (72) mit vorbestimmtem Profil, die mit dem Vorderkantenholm und dem Hinterkantenholm verbunden sind, um dem Flügel sein Unterseitenprofil zu verleihen;
- eine flexible Hülle (60), welche das starre Gerippe des Flügels bedeckt, über die starren Oberseiten- und Unterseitenstangen ein Flügelprofil definiert und mehrere Aufnahmen (80) umfasst, in welchen die mehreren starren Oberseitenstangen (71) und die mehreren starren Unterseitenstangen (72) eines Flügels gelagert sind,
***dadurch gekennzeichnet, dass*** das Luftfahrzeug außerdem mehrere starre Querstreben (120) umfasst, die jeweils zwischen einer Oberseitenstange (71) und einer Unterseitenstange (72) angeordnet sind, wobei die Unterseitenstange und die Oberseitenstange, zwischen denen eine Querstrebe angeordnet ist, im Wesentlichen in einer vertikalen Ebene (104) aufeinander ausgerichtet sind, mit dem Ziel, einen vorbestimmten festen Abstand zwischen der Unterseitenstange und der Oberseitenstange aufrechtzuerhalten.

2. Leichtes Luftfahrzeug nach Anspruch 1, ***dadurch gekennzeichnet, dass*** die flexible Hülle (60) mehrere Aufnahmen (80) umfasst, in welchen die mehreren starren Oberseitenstangen (71) und die mehreren starren Unterseitenstangen (72) eines Flügels gelagert sind, und dadurch, dass die mehreren Querstreben mit den starren Oberseiten- und Unterseitenstangen über die flexible Hülle verbunden sind.

3. Leichtes Luftfahrzeug nach Anspruch 1 oder 2, ***dadurch gekennzeichnet, dass*** eine Querstrebe (120) von den mehreren Querstreben mit der flexiblen Hülle (60) oder mit den starren Oberseitenstangen (71) und Unterseitenstangen (72) durch eine Verbindung vom selbstblockierenden Typ verbunden ist, deren selbstblockierende Eigenschaft sichergestellt ist, wenn das Luftschiff fliegt.

4. Leichtes Luftfahrzeug nach einem der Ansprüche 1 bis *3, **dadurch gekennzeichnet, dass*** die mehreren Querstreben (120) auf eine lösbare Weise mit der flexiblen Hülle (60) oder mit den starren Oberseitenstangen (71) und Unterseitenstangen (72) verbunden sind.

5. Leichtes Luftfahrzeug nach Anspruch 4, ***dadurch gekennzeichnet, dass*** eine Querstrebe (120) von den mehreren Querstreben durch eine schnell lösbare Verbindung (121) vom Typ "Klettverschluss" oder von einem analogen Typ auf eine lösbare Weise mit der flexiblen Hülle (60) oder mit den starren Oberseitenstangen (71) und Unterseitenstangen (72) verbunden ist.

6. Leichtes Luftfahrzeug nach einem der Ansprüche 1 bis *5, **dadurch gekennzeichnet, dass*** eine Querstrebe (120) von den mehreren starren Querstreben einen Teilraum zwischen dem Vorderkantenholm (20) und dem Hinterkantenholm (30) einnimmt.

7. Leichtes Luftfahrzeug nach Anspruch 6, ***dadurch gekennzeichnet, dass*** der Teilraum auf einen Bereich (105) begrenzt ist, der dem dicksten Abschnitt des Flügelprofils (106) entspricht.

8. Leichtes Luftfahrzeug nach einem der Ansprüche 1 bis *7, **dadurch gekennzeichnet, dass*** eine Querstrebe (120) von den mehreren starren Querstreben Grenzflächen mit den Oberseitenstangen (71) und Unterseitenstangen (72) aufweist, welche die Form einer Auskehlung (122) annehmen, in deren Innerem die Oberseitenstange oder Unterseitenstange angeordnet ist.

9. Leichtes Luftfahrzeug nach Anspruch 8, ***dadurch gekennzeichnet, dass*** die Auskehlung (122) einen Querschnitt in Form eines V eines U oder eines Kreisbogens annimmt.

10. Leichtes Luftfahrzeug nach Anspruch 2, ***dadurch gekennzeichnet, dass*** die Aufnahmen (80) der flexiblen Hülle (60), in welchen die Oberseitenstangen (71) bzw. die Unterseitenstangen (72) gelagert sind, jeweils aus einer flexiblen Hülse bestehen, in deren Innerem eine starre Unterseiten- oder Oberseitenstange eingeschoben ist.
